(19)

**Europäisches Patentamt**

**European Patent Office**

**Office européen des brevets**

(11)  **EP 4 596 311 A1**

(12)  # EUROPEAN PATENT APPLICATION
published in accordance with Art. 153(4) EPC

(43) Date of publication:
06.08.2025 Bulletin 2025/32

(21) Application number: 23870777.2

(22) Date of filing: 26.09.2023

(51) International Patent Classification (IPC):
*B60N 2/02* (2006.01)     *B60N 2/00* (2006.01)
*B60R 16/037* (2006.01)     *B60R 16/00* (2006.01)
*B60G 17/015* (2006.01)     *B60G 17/00* (2006.01)
*G06F 30/15* (2020.01)     *A47C 7/62* (2006.01)

(52) Cooperative Patent Classification (CPC):
A47C 7/62; B60G 17/00; B60G 17/015; B60N 2/00;
B60N 2/02; B60N 2/06; B60N 2/16; B60N 2/22;
B60N 2/50; B60N 2/806; B60R 16/00;
B60R 16/037; G06F 30/15

(86) International application number:
PCT/CN2023/121399

(87) International publication number:
WO 2024/067548 (04.04.2024 Gazette 2024/14)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 30.09.2022 CN 202211214903

(71) Applicant: **Yanfeng International Automotive
Technology Co., Ltd.
Shanghai 201306 (CN)**

(72) Inventor: **DING, Jiajun
Shanghai 201315 (CN)**

(74) Representative: **Reitstötter Kinzebach
Patentanwälte
Sternwartstraße 4
81679 München (DE)**

(54)  **METHOD FOR ADJUSTING ZERO-GRAVITY SEAT IN VEHICLE, AND COMPUTING DEVICE
AND VEHICLE**

(57)      A method for adjusting a seat in a vehicle is disclosed, wherein the seat is a zero-gravity seat having a sitting posture mode and a zero-gravity posture mode. The method includes: acquiring user characteristic information of an occupant of the seat and seat mode information of the seat to adjust a seat state of the seat to an initial state; acquiring seat characteristic data for the seat; acquiring vehicle static parameter information and vehicle dynamic parameter information for the vehicle; evaluating a comfort level of the seat based on the user characteristic information, the vehicle static parameter information, the vehicle dynamic parameter information, the seat characteristic data, a damping coefficient, and a stiffness coefficient; determining a first target damping coefficient that causes the comfort level of the seat to satisfy a predetermined comfort level condition; and adjusting the seat state of the seat to a first target state based on the first target damping coefficient. The method can dynamically adjust the seat during traveling of the vehicle, and objectively evaluating the comfort by means of multi-dimensional inputs, thereby improving personalized adaptability in the zero-gravity posture.

EP 4 596 311 A1

100

101

Acquire user characteristic information of an occupant of the seat, seat mode information and seat characteristic data of the seat, the seat characteristic data including seat mass information, an original damping coefficient and an original stiffness coefficient

102

Adjust a seat state of the seat to an initial state based on the user characteristic information and the seat mode information, wherein the seat state includes a damping coefficient, a stiffness coefficient, and a seat position parameter

103

Acquire vehicle static parameter information of the vehicle and vehicle dynamic parameter information of the vehicle over a first period during traveling of the vehicle

104

Evaluate a comfort level of the seat based on the user characteristic information, the vehicle static parameter information, the vehicle dynamic parameter information over the first period, the seat characteristic data, the damping coefficient, and the stiffness coefficient

105

Determine, over the first period, a first target damping coefficient that causes the comfort level of the seat to satisfy a predetermined comfort level condition

106

Adjust the seat state of the seat to a first target state based on the first target damping coefficient

**FIG. 1**

## EP 4 596 311 A1

**Description**

### Field of the disclosure

The present disclosure relates to the field of vehicle technology, and in particular to a method for adjusting a zero-gravity seat in a vehicle, a computer device, a computer-readable storage medium and a vehicle.

### Background

Comfort has always been one of vehicle factors that users take most interest in. Occupants including drivers and passengers have increasing requirements for the comfort of a vehicle seat which is an important component of a vehicle. In order to improve the comfort, more and more car manufacturers start working on providing zero-gravity seats. The zero-gravity seats are designed by combining an ergonomic design of car seats with zero-gravity principle, which aims to reduce the pressure on parts of a body that contact the seat as much as possible, or to distribute the pressure on the body more evenly, so as to reduce the discomfort caused when the seats are used.

However, in the prior art, only an ideal sitting posture and static adjustment are often considered when the seats are adjusted, while there is still no enough adaptability to adjust the zero-gravity seats.

### Summary

In view of the aforementioned drawbacks in the prior art, the present invention provides a method for adjusting a seat in a vehicle, a computing device, a computer-readable storage medium, and a vehicle including the computing device. The invention dynamically adjusts the seat during traveling of the vehicle, and objectively evaluates the comfort by means of multi-dimensional inputs, thereby improving personalized adaptability in the zero-gravity posture.

According to a first aspect of the present invention, a method for adjusting a seat in a vehicle is provided, wherein the seat is a zero-gravity seat having a sitting posture mode and a zero gravity posture mode. The method comprises: acquiring user characteristic information of an occupant of the seat and seat mode information and seat characteristic data of the seat, the seat characteristic data including seat mass information, an original damping coefficient, and an original stiffness coefficient; adjusting a seat state of the seat to an initial state based on the user characteristic information and the seat mode information, wherein the seat state includes a damping coefficient, a stiffness coefficient, and a seat position parameter; acquiring vehicle static parameter information of the vehicle and vehicle dynamic parameter information of the vehicle over a first period during traveling of the vehicle; when the vehicle is in a traveling state and the seat is in the zero gravity posture mode, performing the steps of: evaluating a comfort level of the seat based on the user characteristic information, the vehicle static parameter information, the vehicle dynamic parameter information over the first period, the seat characteristic data, the damping coefficient, and the stiffness coefficient; and determining, over the first period, a first target damping coefficient that causes the comfort level of the seat to satisfy a predetermined comfort level condition; and adjusting the seat state of the seat to a first target state based on the first target damping coefficient.

The method for adjusting a seat in a vehicle according to the aforementioned first aspect may include one or more of the following preferred features independently or in combination.

Preferably, the user characteristic information includes gender information, age information, and physical information for the occupant.

Preferably, the physical information includes upper body size, lower body size, shoulder width, hip width, and weight.

Preferably, adjusting the seat state of the seat to the initial state based on the user characteristic information and the seat mode information comprises: determining a seat position parameter model based on the seat mode information; determining an initial seat position parameter of the seat based on the seat position parameter model and the user characteristic information; determining an initial damping coefficient based on the seat mode information; adjusting the seat state of the seat to the initial state having the initial seat position parameter and the initial damping coefficient.

Preferably, the seat position parameter comprises at least one of a slide rail position, a seat height, a backrest position, and a headrest position.

Preferably, evaluating the comfort level of the seat based on the seat mode information, the user characteristic information, the vehicle static parameter information, the vehicle dynamic parameter information, the seat characteristic data, the damping coefficient, and the stiffness coefficient comprises: determining a dynamics model based on the seat mode information; determining a model parameter for a user classification model based on the user characteristic information, the user classification model being a classification model derived by dataset training, verification, and testing based on big data; establishing human body model data based on the user classification model, the model parameters, and the user characteristic information, the human body model data including mass, a stiffness coefficient, and a damping coefficient for each of at least one part of a human body; calculating at least one root mean square value of acceleration corresponding to the at least one part of the human body based on the dynamics model, the human body model data, the vehicle static parameter information, the vehicle dynamic parameter information, the seat characteristic data, the damping coefficient, and the stiffness coefficient; and generating the comfort level of the seat based on the at least one root mean square value of acceleration.

Preferably, the at least one root mean square value of acceleration comprises two or more root mean square values of accelerations, and generating the comfort level of the seat based on the root mean square value of the at least one acceleration comprises generating the comfort level of the seat based on weighting on the two or more root mean square values of acceleration.

Preferably, the at least one root mean square value of acceleration comprises two or more root mean square values of accelerations, and generating the comfort level of the seat based on the at least one root mean square value of acceleration comprises generating the comfort level of the seat based on weighting on the two or more root mean square values of acceleration.

Preferably, the at least one part of the human body comprises at least one of head, upper torso, internal organs, and lower torso.

Preferably, the vehicle static parameter information includes whole vehicle mass, moment of inertia of vehicle body, a suspension stiffness coefficient, and a suspension damping coefficient.

Preferably, the vehicle dynamic parameter information includes vehicle speed information, vertical acceleration information, and vertical vibration frequency information.

Preferably, determining, over the first period, the first target damping coefficient that causes the comfort level of the seat to satisfy the predetermined comfort level condition comprises the steps of a process: A. taking an initial damping coefficient as a current damping coefficient and the comfort level of the seat with respect to the configuration of the initial damping coefficient as a current comfort level; B. adjusting the current damping coefficient in a first direction with a first step size to generate a new damping coefficient; C. evaluating a new comfort level of the seat based on the user characteristic information, the vehicle static parameter information, the vehicle dynamic parameter information, the seat characteristic data, the new damping coefficient, and the stiffness coefficient; D. going to step E, if a number of times of the iterations reaches a threshold number of times, otherwise updating the current damping coefficient to the new damping coefficient and updating the current comfort level to the new comfort level followed by returning to step B, if the new comfort level is greater than the current comfort level; updating the first direction to an opposite direction followed by returning to step B, if the new comfort level is less than the current comfort level; E. taking the new damping coefficient as the first target damping coefficient and terminating the process, if the new comfort level is greater than the current comfort level, or taking the current damping coefficient as the first target damping coefficient followed by terminating the flow, if the new comfort level is smaller than the current comfort level.

Preferably, the method further comprises: acquiring the vehicle dynamic parameter information over a second period during traveling of the vehicle; when the vehicle is in a traveling state and the seat is in the zero gravity posture mode, performing the steps of: evaluating the comfort level of the seat based on the user characteristic information, the vehicle static parameter information, the vehicle dynamic parameter information over the second period, the seat characteristic data, the damping coefficient, and the stiffness coefficient; and determining, over the second period, a second target damping coefficient that causes the comfort level of the seat to satisfy the predetermined comfort condition; and adjusting the seat state of the seat to a second target state based on the second target damping coefficient.

Preferably, the comfort level condition comprises at least one of: the comfort level of the seat exceeds a comfort level of the seat with respect to the configuration of the initial damping coefficient; the comfort level of the seat exceeds a predetermined comfort level threshold; the comfort level of the seat is adjusted up to a threshold number of times.

Preferably, the method further comprises: acquiring the vehicle dynamic parameter information over a second period during traveling of the vehicle; when the vehicle is in a traveling state and the seat is in the zero gravity posture mode, performing the steps of: evaluating the comfort level of the seat based on the user characteristic information, the vehicle static parameter information, the vehicle dynamic parameter information over the second period, the seat characteristic data, the damping coefficient, and the stiffness coefficient; and determining, over the second period, a second target damping coefficient that causes the comfort level of the seat to satisfy the predetermined comfort condition; and adjusting the seat state of the seat to a second target state based on the second target damping coefficient.

Preferably, the comfort level condition comprises at least one of: the comfort level of the seat exceeds the comfort level of the seat with respect to the configuration of the initial damping coefficient; the comfort level of the seat exceeds a predetermined comfort level threshold; the comfort level of the seat is adjusted up to a threshold number of times.

According to a second aspect of the present invention, there is provided a computing device comprising: at least one processor; and a memory for storing computer-executable instructions that, when executed, cause the at least one processor to perform the method according to the aforementioned first aspect.

According to a third aspect of the present invention, there is provided a computer-readable storage medium having computer-executable instructions stored thereon for performing the method according to the aforementioned first aspect.

According to a fourth aspect of the present invention, there is provided a vehicle comprising the computing device according to the aforementioned second aspect.

## Brief description of the drawings

Other features and advantages of the present invention will be better understood from the following preferred embodiments detailed described in conjunction with the accompanying drawings, in which the same reference numerals represent the same or similar components.

FIG. 1 shows a flowchart of an exemplary method for adjusting an in-vehicle seat according to an embodiment of the present invention.
FIG. 2 shows an exemplary flowchart of an implementation of step 105 of FIG. 1 according to an embodiment of the present invention.
FIG. 3 shows a block diagram of a computing device according to an embodiment of the present invention.

## Detailed description

In the prior art, when seats are adjusted, only an ideal sitting posture and static adjustment are often consider, inputs relate to few dimensions and comfort may not be evaluated objectively. Thus, there is still no enough adaptability to adjust the zero-gravity seats.

As described below, some exemplary embodiments of the present disclosure provide a method for adjusting an in-vehicle zero-gravity seat and a vehicle. More specifically, the seat is dynamically adjusted during traveling of the vehicle, and the comfort is objectively evaluated by means of multi-dimensional inputs, thereby improving personalized adaptability in the zero-gravity posture.

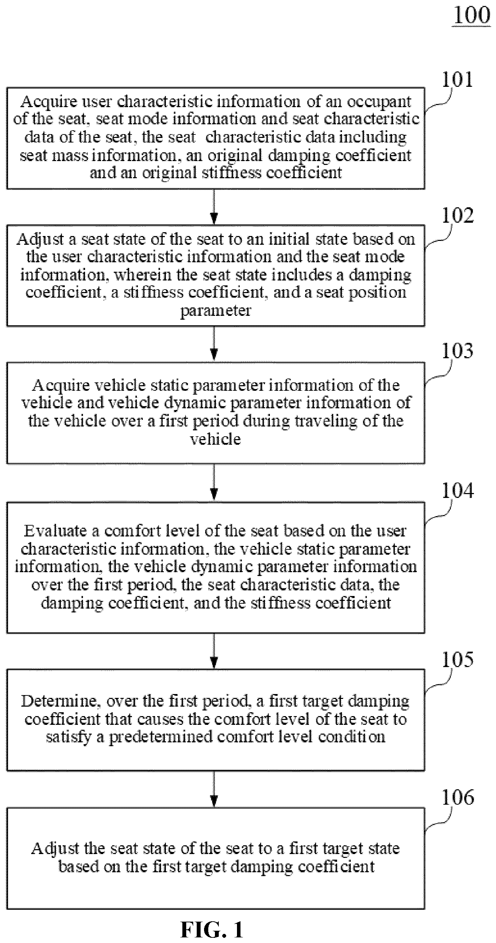

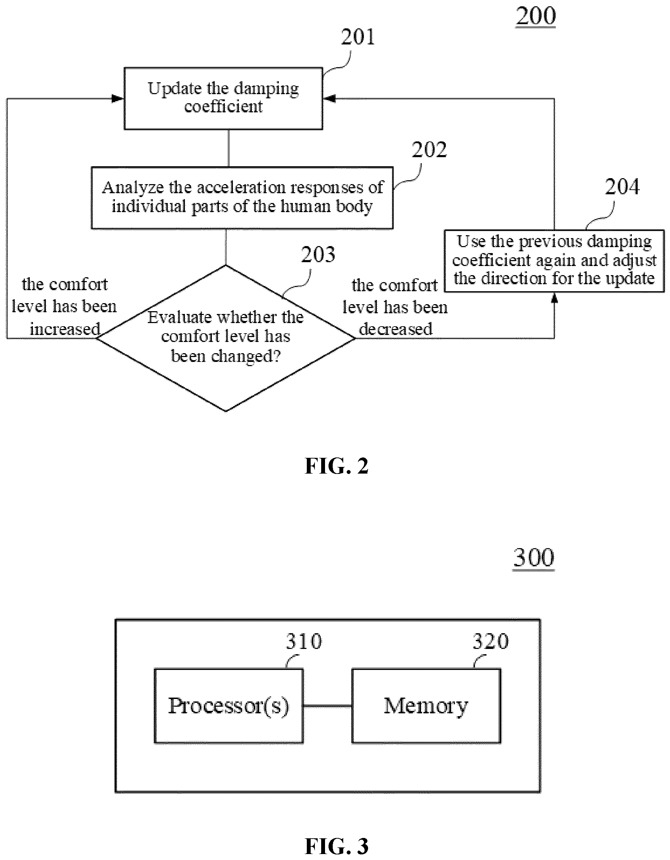

Referring to FIG. 1, a block diagram of an exemplary method 100 for adjusting a seat in a vehicle according to an embodiment of the present invention is shown, and the seat is a zero-gravity seat having a sitting posture mode and a zero-gravity posture mode. The method 100 may be implemented by, for example, the computing device 300 of FIG. 3. The method 100 includes steps 101-106.

At step 101, user characteristic information of an occupant of the seat, seat mode information and seat characteristic data of the seat are acquired, wherein the seat characteristic data includes seat mass information (Ws), an original damping coefficient (C0) and an original stiffness coefficient (K0).

For example, the seat characteristic data may be acquired via an electronic control unit (ECU) through a vehicle body bus (e.g., CAN or other bus(es)).

For example, the seat mode information may be configured via setting a seat mode to a sitting posture mode or a zero-gravity posture mode with one click by a physical button provided in the vehicle, or via setting the seat mode to a sitting posture mode or a zero-gravity posture mode through a human-machine interface (HMI) provided in the vehicle.

For example, the user characteristic information may include gender information (Ge), age information (Ag), and physical information of the occupant. Further, the physical information may include upper body size (Lu), lower body size (Ld), shoulder width size (Ls), hip width size (Lb), and weight (Wt). By including the gender information and the age information in the user characteristic information, it is possible to better model the human body differentially. For example, an adult and a child having the same weight should correspond to different human body models.

In some examples, the user characteristic information may be manually input by the user.

In some examples, various information on body size (e.g., the upper body size, the lower body size, the shoulder width and the hip width) in the physical information can be acquired via visual sensors, and information about weight can be acquired based on pressure sensors provided on or in seat cushions, for example, through an Occupant Classification System.

In some examples, image information of the occupant in the seat may be captured based on an optical system such as a camera arranged in a cockpit system, thereby obtaining the gender information, the age information, and the physical information of the occupant in the seat, without user inputs.

At step 102, a seat state of the seat is adjusted to an initial state based on the user characteristic information and the seat mode information, wherein the seat state includes a damping coefficient, a stiffness coefficient, and a seat position parameter.

In some examples, step 102 may include: determining a seat position parameter model based on seat mode information; determining an initial seat position parameter of the seat based on the seat position parameter model and the user characteristic information; determining an initial damping coefficient based on the seat mode information; and adjusting the seat state of the seat to the initial state having the initial seat position parameter and the initial damping coefficient.

In some examples, the seat position parameter may include at least one of a slide rail position, seat height, a backrest position, and a headrest position.

For example, based on the user characteristic information, a human body data matrix X= (Lu, Ld, Ls, Lb, Ge, Ag, Wt) $^T$ can be derived. When the seat mode information indicates the sitting posture mode, a seat position parameter model M1 is derived, thereby generating a seat position adjustment parameter matrix Y=M1*X. For example, a seat adjustment model may be:

$$Y = (T, H, B, P) = M1*X$$

Where T represents the percentage of seat slide position after adjustment, H represents the percentage of seat height after adjustment, B represents the percentage of backrest position after adjustment, P represents the percentage of headrest position after adjustment, and M1 represents a regression model derived through dataset training based on big data.

When the seat mode information indicates the sitting posture mode, the initial damping coefficient C0 of the seat may be, for example, a default damping coefficient C1 calibrated for the sitting posture mode at factory.

Similarly, when the seat mode information indicates the zero-gravity posture mode, a seat position parameter model M2 is derived, thereby generating the seat position adjustment parameter matrix Y=M2*X. For example, the seat adjustment model may be:

$$Y = (T, H, B, P) = M2*X$$

When the seat mode information indicates the zero-gravity posture mode, the initial damping coefficient C0 of the seat may be, for example, a damping coefficient C2 calibrated for the zero-gravity posture mode at factory.

In some examples, adjusting the seat state of the seat to the initial state may include transmitting the determined initial seat position parameter, initial damping coefficient, initial stiffness coefficient to a controller controlling the seat (e.g., via a vehicle body bus), so that the controller adjusts the slide rail, the backrest, the height, the headrest, and a damper of the seat. The damper may be, for example, an air damper, a magnetorheological damper, or an electrical damper. Furthermore, one or more dampers may be provided at some components of the seat (e.g., the headrest, the backrest, seat cushion) to improve the effect of shock absorption, and thus improving the comfort.

At step 103, vehicle static parameter information and vehicle dynamic parameter information over a first period during traveling are acquired for the vehicle.

For example, the vehicle static parameter information may include whole vehicle mass (Wv), moment of inertia of vehicle body (Jv), a suspension stiffness coefficient (Kv), and a suspension damping coefficient (Cv). For example, the vehicle static parameter information may be acquired by calibration for the whole vehicle.

For example, the vehicle dynamic parameter information may include vehicle speed information (Vs), vertical acceleration information (Av), and vertical vibration frequency information (Fv). For example, the vehicle speed information may be acquired through the vehicle body bus (e.g., CAN or other bus(es)) via the ECU (e.g., ECU for the whole vehicle), and the vertical acceleration and its change rate, the vertical vibration frequency and its change rate may be acquired through vibration sensors installed under the seats. The vehicle dynamic parameter information can indicate a road condition while driving. For example, the vibration caused by a road surface (due to bumps on the road surface) would be transferred to the occupant through the seats, thus affecting the comfort of the occupant. For example, the shock absorption may be achieved by adjusting the damping coefficient of the seat so as to improve the comfort of the occupant.

At step 104, when the vehicle is in a traveling state and the seat is in the zero-gravity posture mode, the following steps are performed: a comfort level of the seat is evaluated based on the user characteristic information, the vehicle static parameter information, the vehicle dynamic parameter information over the first period, the seat characteristic data, the damping coefficient and the stiffness coefficient. In this step, by means of multi-dimensional inputs, the comfort can be calculated sufficiently and objectively evaluated from more perspectives such as gender, age, etc.

In some examples, step 104 may include: determining a dynamics model based on the seat mode information; determining model parameters for a user classification model based on the user characteristic information, the user classification model being a classification model derived through dataset training, verification and testing based on big data; establishing human body model data based on the user classification model, the model parameters, and the user characteristic information, the human body model data including the mass, a stiffness coefficient, and a damping coefficient of each of at least one part of the human body; calculating at least one root mean square value of acceleration corresponding to the at least one part of the human body based on the dynamics model, the human body model data, the vehicle static parameter information, the vehicle dynamic parameter information, the seat characteristic data, the damping coefficient, and the stiffness coefficient; and generating the comfort level of the seat based on the at least one root mean square value of acceleration.

For example, the dynamics model Dm = (Dml, Dm2)$^T$ is selected in accordance with the sitting posture indicated by the seat configuration mode information.

For example, a four-degree-of-freedom human body model is established by acquiring the body size data, gender, and age information of the occupant. It is calculated using the formula:

$$Y_2 = CM*X_2$$

Where CM = (CM1, CM2, CM3)$^T$ is the classification model, and different model parameters can be automatically selected in accordance with different physical characteristics, gender and age groups. CM1 is a size model, CM2 is a gender model and CM3 is an age model. The human body data matrix $X_2$ = (Lu, Ld, Ls, Lb, Ge, Ag, Wt)$^T$ is the user characteristic information acquired for the occupant.

$$Y2 = \begin{bmatrix} m1 & m2 & m3 & m4 \\ c1 & c2 & c3 & c4 \\ k1 & k2 & k3 & k4 \end{bmatrix}$$

Y2 is the output four-degree-of-freedom human linear model of the head, upper torso, internal organs and lower torso, including the mass (m1, m2, m3, m4), the stiffness coefficient (k1, k2, k3, k4) and the damping coefficient (c1, c2, c3, c4) of each part thereof.

By analyzing the acceleration response of the each part of the human body, the response formula is shown as follows:

$$(ah, ab, ai, al)^T = (Dm1, Dm2)^T \begin{bmatrix} f(Y2) & \cdots & \\ & f(V) & \\ \vdots & \ddots & \vdots \\ & \cdots & f(S) \end{bmatrix} (Vs, Av, Fv, Cs)^T$$

Where X = (Vs, Av, Fv, Cs)$^T$ is the acquired vehicle dynamic parameter information and a seat suspension damping coefficient; Y = (ah, ab, ai, al)$^T$ is the root mean square matrix of accelerations in each degree of freedom (for example, of the head, the upper torso, the internal organs and the lower torso); S = (ms, C0, K0)$^T$ is an initial seat parameter matrix, including the seat mass, the initial damping and the initial stiffness; V = (Wv, Jv, Kv, Cv)$^T$ is the vehicle static parameter matrix; and Y2 is the four-degree-of-freedom human body model data as calculated above.

For example, based on weighting on Y = (ah, ab, ai, al)$^T$, the comfort can be calculated as follows:

$$Sa = \sqrt{(w_1 * a_h)^2 + (w_2 * a_b)^2 + (w_3 * a_i)^2 + (w_4 * a_l)^2}$$

Where w1 to w4 are weighting coefficients, and the sum thereof is 1.

For example, the weighting may be selectively performed to highlight the importance of the comfort for a particular one of the plurality of parts with respect to the overall comfort. For example, when it is desired to focus on evaluating the comfort for the head, w1 may be set as a maximum of the coefficients (e.g., 1). For example, when it is desired to ignore the comfort for the head, w1 may be set to a minimum of the coefficients (e.g., 0).

In some examples, the values for the comfort may be classified in accordance with a following table.

Table 1: Comfort classification

| Sa (m/C2) | Subjective Feeling | Comfort Level |
|---|---|---|
| <Sa0 | not discomfortable | 1 |
| Sa- Sa2 | somewhat discomfortable | 0.8 |
| Sa3- Sa4 | a little discomfortable | 0.6 |

(continued)

| Sa (m/C2) | Subjective Feeling | Comfort Level |
|---|---|---|
| Sa5-S6 | discomfortable | 0.4 |
| Sa7- Sa8 | very discomfortable | 0.2 |
| > Sa9 | extremely discomfortable | 0 |

For example, as shown in Table 1, the comfort Sa can be divided into different comfort levels in accordance with ranges thereof. By adjusting the seat suspension damping, a new comfort level can be obtained. The new comfort level can be compared with an initial comfort level to judge whether the comfort level has increased. If so, it means that the comfort level has been improved. In some examples, the calculated comfort Sa may also be directly taken as the comfort level.

At step 105, a first target damping coefficient that causes the comfort of the seat to satisfy a predetermined comfort condition is determined over the first period.

At step 106, the seat state of the seat is adjusted to the first target state based on the first target damping coefficient.

In some examples, the seat state of the seat is adjusted to the first target state based on the first target damping coefficient. Similarly, as previously described, the adjusting the seat state of the seat to the first target state may include transmitting the determined first target damping coefficient to a controller controlling the seat (e.g., via a vehicle body bus), so that the controller adjusts the slide rail, the backrest, the height, the headrest, and the damper of the seat.

Compared with the prior art, method 100 can dynamically adjust the damping coefficient of the seat based on the impact of the vehicle dynamic parameter information on the zero-gravity seat during traveling of the vehicle so as to increase the comfort while in the zero-gravity posture.

FIG. 2 shows an exemplary flowchart of an exemplary implementation 200 of step 105 of FIG. 1 according to an embodiment of the present invention. Implementation 200 includes steps 201-204.

At step 201, a current damping coefficient is adjusted or updated in a first direction (e.g., with a first step size) to generate a new damping coefficient, by taking the initial damping coefficient as the current damping coefficient and the comfort level of the seat with respect to the configuration of the initial damping coefficient as a current comfort level.

At step 202, the acceleration responses of individual parts of the human body are analyzed based on the new damping coefficient to evaluate a new comfort level of the seat.

At step 203, the new comfort level is compared with the current comfort level to evaluate whether the comfort level has been changed.

If the new comfort level is greater than the current comfort level at step 203, the process returns to step 201 to continue to adjust or update the damping coefficient in the first direction, by taking the current damping coefficient as the new damping coefficient and the current comfort level as the new comfort level.

If the new comfort level is less than the current comfort level at step 203, the process goes to step 204 to use the previous damping coefficient again and adjust the direction for the update from the first direction to an opposite direction. Then, the process returns to step 201 to continue to adjust or update the previous damping coefficient in the updated first direction.

In some examples, a threshold number of times may also be set such that the adjustment or update of the damping coefficient is terminated when the adjustment flow is executed iteratively up to the threshold number of times.

In some examples, the flow may be terminated when the adjustment flow is executed iteratively to achieve a comfort level which is optimal in a local sense, and the last damping coefficient can be determined as the target damping coefficient or an optimal damping coefficient.

In some examples, the damping coefficient may be initially adjusted with the first step size. After determining the approximation direction of the damping coefficient, the damping coefficient may be adjusted with a second step size which can be smaller than the first step size, in order to adjust the damping coefficient to the target damping coefficient that satisfies the comfort level condition more finely.

FIG. 3 shows a schematic diagram of a computing device 300 according to an embodiment of the present invention. The computing device 300 includes at least one processor 310 and a memory 320 coupled with the processor 310. The memory 320 is used to store computer-executable instructions that, when executed, cause the processor 310 to perform the methods of the above embodiments (e.g., any one or more steps of the method 100 or implementation 200 described above).

In some examples, the processor 310 may be or be in communication with a vehicle-mounted ECU that controls components for adjusting the seats (e.g., the slide rail, the headrest, the backrest, the suspension, the damper, etc.) such that the processor 310 may adjust the seat state according to the determined seat position parameters, damping coefficients, and stiffness coefficients.

Further, alternatively, the methods described above can be implemented by a computer-readable storage medium. Computer-readable program instructions for performing various embodiments of the present disclosure are carried on the computer-readable storage medium. The computer-readable storage medium may be a tangible device that can hold and store instructions used by an instruction execution device. The computer-readable storage medium may be, for example, but is not limited to, an electrical storage device, a magnetic storage device, an optical storage device, an electromagnetic storage device, a semiconductor storage device, or any suitable combination of the foregoing. More specific examples (a non-exhaustive list) of the computer-readable storage medium include a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical encoding device, such as a punch card or an in-groove raised structure having instructions stored thereon, and any suitable combination of the foregoing. The computer-readable storage media as used herein are not to be construed as transient signals per se, such as radio waves or other electromagnetic waves propagated freely, electromagnetic waves propagated through waveguides or other transmission media (e.g., light pulses propagated through fiber optic cables), or electrical signals transmitted through electrical wires.

Accordingly, in another embodiment, the present disclosure proposes a computer-readable storage medium having computer-executable instructions stored thereon for performing methods of various embodiments of the present disclosure.

It should be noted that the present invention (e.g., the inventive concepts, etc.) has been described in the specification and/or illustrated in the drawings of this patent document according to exemplary embodiments. The embodiments of the present invention are presented by way of example only and are not intended to limit the scope of the present invention. The structure and/or arrangement of the elements of the inventive concepts embodied in the present invention as described in the specification and/or illustrated in the figures is merely illustrative. Although the exemplary embodiments of the present invention have been described in detail in this patent document, it will be readily understood by those of ordinary skill in the art that equivalents, modifications, variations, etc. of the subject matters of the exemplary embodiments and alternative embodiments are possible and are considered to fall within the scope of the present invention. All such subject matters (e.g., modifications, variations, embodiments, combinations, equivalents, etc.) are intended to be included within the scope of the invention. It should also be noted that various/other modifications, variations, substitutions, equivalents, changes, omissions, etc. may be made in the configuration and/or arrangement of the exemplary embodiments (e.g., in terms of concepts, designs, structures, apparatuses, forms, assemblies, constructions, means, functions, systems, processes/methods, steps, sequence of process/method steps, operations, operating conditions, properties, materials, compositions, combinations, etc.) without departing from the scope of the invention. All such subject matter (e.g. modifications, variations, embodiments, combinations, equivalents, etc.) are intended to be included within the scope of the present invention. The scope of the present invention is not intended to be limited to the subject matter (such as details, structures, functions, materials, acts, steps, sequences, systems, results, etc.) described in the specification and/or figures of this patent document. Considering that the claims of this patent document are to be properly construed to cover the full scope of the inventive subject matter (e.g. including any and all such modifications, variations, embodiments, combinations, equivalents, etc.). It should be understood that the terminology used in this patent document aims to provide a description of the subject matter of exemplary embodiments, rather than as a limitation on the scope of the invention.

It should also be noted that, according to the exemplary embodiments, the present invention may include conventional techniques (e.g. techniques embodied and/or integrated in the exemplary embodiments, modifications, variations, combinations, and equivalents), or may include any other applicable techniques (at present and/or in future) with the ability to perform the functions and processes/operations described in the specification and/or illustrated in the figures. All such techniques (e.g. the techniques implemented by way of the embodiments, modifications, variations, combinations, equivalents, etc.) are considered to fall within the scope of the present invention in this patent document.

**Claims**

1. A method for adjusting a seat in a vehicle, wherein the seat is a zero-gravity seat having a sitting posture mode and a zero-gravity posture mode, the method comprising:

   acquiring user characteristic information of an occupant of the seat, seat mode information and seat characteristic data of the seat, the seat characteristic data including seat mass information, an original damping coefficient, and an original stiffness coefficient;
   adjusting a seat state of the seat to an initial state based on the user characteristic information and the seat mode information, wherein the seat state includes a damping coefficient, a stiffness coefficient, and a seat position parameter;

acquiring vehicle static parameter information of the vehicle and vehicle dynamic parameter information of the vehicle over a first period during traveling of the vehicle;

when the vehicle is in a traveling state and the seat is in the zero-gravity posture mode, performing the steps of:

evaluating a comfort level of the seat based on the user characteristic information, the vehicle static parameter information, the vehicle dynamic parameter information over the first period, the seat characteristic data, the damping coefficient, and the stiffness coefficient; and

determining, over the first period, a first target damping coefficient that causes the comfort level of the seat to satisfy a predetermined comfort level condition; and

adjusting the seat state of the seat to a first target state based on the first target damping coefficient.

2. The method according to claim 1, wherein the user characteristic information includes gender information, age information, and physical information for the occupant.

3. The method according to claim 2, wherein the physical information includes upper body size, lower body size, shoulder width size, hip width size, and weight.

4. The method according to claim 2, wherein adjusting the seat state of the seat to the initial state based on the user characteristic information and the seat mode information comprises:

determining a seat position parameter model based on the seat mode information;

determining an initial seat position parameter of the seat based on the seat position parameter model and the user characteristic information;

determining an initial damping coefficient based on the seat mode information;

adjusting the seat state of the seat to the initial state having the initial seat position parameter and the initial damping coefficient.

5. The method according to claim 1, wherein the seat position parameter comprises at least one of a slide rail position, a seat height, a backrest position, and a headrest position.

6. The method according to claim 1 or 2, wherein evaluating the comfort level of the seat based on the seat mode information, the user characteristic information, the vehicle static parameter information, the vehicle dynamic parameter information, the seat characteristic data, the damping coefficient, and the stiffness coefficient comprises:

determining a dynamics model based on the seat mode information;

determining a model parameter for a user classification model based on the user characteristic information, the user classification model being a classification model derived by dataset training, verification, and testing based on big data;

establishing human body model data based on the user classification model, the model parameters, and the user characteristic information, the human body model data including the mass, a stiffness coefficient, and a damping coefficient of each of at least one part of a human body;

calculating at least one root mean square value of acceleration corresponding to the at least one part of the human body based on the dynamics model, the human body model data, the vehicle static parameter information, the vehicle dynamic parameter information, the seat characteristic data, the damping coefficient, and the stiffness coefficient;

generating the comfort level of the seat based on the at least one root mean square value of acceleration.

7. The method according to claim 6, wherein

the at least one root mean square value of acceleration comprises two or more root mean square values of acceleration, and

generating the comfort level of the seat based on the at least one root mean square value of acceleration comprises generating the comfort level of the seat based on weighting on the two or more root mean square values of accelerations.

8. The method according to claim 6, wherein the at least one part of the human body comprises at least one of head, upper torso, internal organs, and lower torso.

9. The method according to claim 1, wherein the vehicle static parameter information includes whole vehicle mass, moment of inertia of vehicle body, a suspension stiffness coefficient, and a suspension damping coefficient.

10. The method according to claim 1, wherein the vehicle dynamic parameter information includes vehicle speed information, vertical acceleration information, and vertical vibration frequency information.

11. The method according to claim 1, wherein determining, over the first period, the first target damping coefficient that causes the comfort level of the seat to satisfy the predetermined comfort level condition comprises the steps of a process:

     A. taking an initial damping coefficient as a current damping coefficient and the comfort level of the seat with respect to the configuration of the initial damping coefficient as a current comfort level;
     B. adjusting the current damping coefficient in a first direction to generate a new damping coefficient;
     C. evaluating a new comfort level of the seat based on the user characteristic information, the vehicle static parameter information, the vehicle dynamic parameter information, the seat characteristic data, the new damping coefficient, and the stiffness coefficient;
     D. going to step E, if the number of times of the adjustment reaches a threshold number of times, otherwise

          updating the current damping coefficient to the new damping coefficient and updating the current comfort level to the new comfort level followed by returning to step B, if the new comfort level is greater than the current comfort level,
          updating the first direction to an opposite direction followed by returning to step B, if the new comfort level is less than the current comfort level;

     E. taking the new damping coefficient as the first target damping coefficient followed by terminating the process, if the new comfort level is greater than the current comfort level, or

     taking the current damping coefficient as the first target damping coefficient followed by terminating the process, if the new comfort level is smaller than the current comfort level.

12. The method according to claim 1, further comprising:

     acquiring the vehicle dynamic parameter information over a second period during traveling of the vehicle;
     when the vehicle is in a traveling state and the seat is in the zero-gravity posture mode, performing the steps of:

          evaluating the comfort level of the seat based on the user characteristic information, the vehicle static parameter information, the vehicle dynamic parameter information over the second period, the seat characteristic data, the damping coefficient, and the stiffness coefficient; and
          determining, over the second period, a second target damping coefficient that causes the comfort level of the seat to satisfy the predetermined comfort condition; and

     adjusting the seat state of the seat to a second target state based on the second target damping coefficient.

13. The method according to claim 1, wherein the comfort level condition comprises at least one of:

     the comfort level of the seat exceeds a comfort level of the seat with respect to the configuration of the initial damping coefficient;
     the comfort level of the seat exceeds a predetermined comfort level threshold;
     the comfort level of the seat is adjusted up to a threshold number of times.

14. A computing device comprising:

     at least one processor; and
     a memory for storing computer-executable instructions that, when executed, cause the at least one processor to perform the method of any one according to claims 1-13.

15. A computer-readable storage medium having computer-executable instructions stored thereon for performing the method according to any one of claims 1-13.

**16.** A vehicle comprising the computing device according to claim 14.

100

101

Acquire user characteristic information of an occupant of the seat, seat mode information and seat characteristic data of the seat, the seat characteristic data including seat mass information, an original damping coefficient and an original stiffness coefficient

102

Adjust a seat state of the seat to an initial state based on the user characteristic information and the seat mode information, wherein the seat state includes a damping coefficient, a stiffness coefficient, and a seat position parameter

103

Acquire vehicle static parameter information of the vehicle and vehicle dynamic parameter information of the vehicle over a first period during traveling of the vehicle

104

Evaluate a comfort level of the seat based on the user characteristic information, the vehicle static parameter information, the vehicle dynamic parameter information over the first period, the seat characteristic data, the damping coefficient, and the stiffness coefficient

105

Determine, over the first period, a first target damping coefficient that causes the comfort level of the seat to satisfy a predetermined comfort level condition

106

Adjust the seat state of the seat to a first target state based on the first target damping coefficient

**FIG. 1**

200

201

Update the damping
coefficient

202

Analyze the acceleration responses of
individual parts of the human body

203

204

the comfort
level has been
increased

Evaluate whether the
comfort level has
been changed?

the comfort
level has been
decreased

Use the previous damping
coefficient again and adjust
the direction for the update

**FIG. 2**

300

310

320

Processor(s)

Memory

**FIG. 3**

## INTERNATIONAL SEARCH REPORT

| International application No. |
|---|
| **PCT/CN2023/121399** |

| A. | CLASSIFICATION OF SUBJECT MATTER |
|---|---|

B60N2/02(2006.01)i; B60N2/00(2006.01)i; B60R16/037(2006.01)i; B60R16/00(2006.01)i; B60G17/015(2006.01)i; B60G17/00(2006.01)i; G06F30/15(2020.01)i; A47C7/62(2006.01)i

According to International Patent Classification (IPC) or to both national classification and IPC

| B. | FIELDS SEARCHED |
|---|---|

Minimum documentation searched (classification system followed by classification symbols)

IPC: B60N2/-; B60R16/-; B60G17/-; G06F30/-; A47C7/-

Documentation searched other than minimum documentation to the extent that such documents are included in the fields searched

Electronic data base consulted during the international search (name of data base and, where practicable, search terms used)

CNABS, CNTXT, WPABSC, ENTXTC, CNKI: 延锋, 丁家俊, 车, 座椅, 座舱, 太空椅, 太空舱, 零重力, 太空, 无重力, 微重力, 坐姿, 躺, 卧, 舒适度, 舒适值, 舒适指数, 舒适性, 阻尼, 刚度, 系数, 目标, 预定, 设定, 评估, 预估, 估算, 计算, 初始化, 更新, 比较, 正向, 反向, 调节, 调整, 阈值, 步长, 步距, 用户, 乘客, 特征, 年龄, 性别, 体重, 座椅悬架, 车辆, 静态, 动态, 路况, 振动, 震动, 多维, 维度, 动态, 实时, 在线, 加速度, 均方根; VEN, USTXT, ENTXT, DWPI, SCI, IEEE: car, vehicle, seat, cockpit, space chair, space cabin, zero gravity, no gravity, microgravity, sitting, lying, comfort, value, index, damping, stiffness, coefficient, objective, predetermined, evaluat+, presect, estimate, calculate, initialize, update, compar+, forward, reverse, regulat+, adjust+, threshold, step, user, passenger, characteristics, age, gender, weight, suspension, static, dynamic, road condition, vibration, shock, multi+, dimensional, real? time, online, acceleration, root mean square.

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 113352960 A (DONGFENG MOTOR GROUP CO., LTD.) 07 September 2021 (2021-09-07) entire document | 1-16 |
| A | US 2021107385 A1 (TOYOTA MOTOR CO., LTD.) 15 April 2021 (2021-04-15) entire document | 1-16 |
| A | CN 113386638 A (WUHU XIONGSHI AUTOMOBILE TECHNOLOGY CO., LTD. et al.) 14 September 2021 (2021-09-14) entire document | 1-16 |
| A | CN 113581032 A (SHANGHAI GUOJIN AUTOMOBILE TECHNOLOGY CO., LTD.) 02 November 2021 (2021-11-02) entire document | 1-16 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 December 2023** | **14 December 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/121399** |

### C. DOCUMENTS CONSIDERED TO BE RELEVANT

| Category* | Citation of document, with indication, where appropriate, of the relevant passages | Relevant to claim No. |
|---|---|---|
| A | CN 114932845 A (CHONGQING JINKANG NEW ENERGY VEHICLE CO., LTD.) 23 August 2022 (2022-08-23)<br>entire document | 1-16 |
| A | CN 106114316 A (XI'AN UNIVERSITY OF SCIENCE AND TECHNOLOGY) 16 November 2016 (2016-11-16)<br>entire document | 1-16 |
| A | CN 115092161 A (DENSO CORP.) 23 September 2022 (2022-09-23)<br>entire document | 1-16 |
| A | CN 110803080 A (XIAMEN UNIVERSITY OF TECHNOLOGY) 18 February 2020 (2020-02-18)<br>entire document | 1-16 |
| A | CN 113580867 A (BYD CO., LTD.) 02 November 2021 (2021-11-02)<br>entire document | 1-16 |
| A | CN 114043913 A (DONGFENG MOTOR GROUP CO., LTD.) 15 February 2022 (2022-02-15)<br>entire document | 1-16 |
| A | US 2021197838 A1 (ZAHNRADFABRIK FRIEDRICHSHAFEN) 01 July 2021 (2021-07-01)<br>entire document | 1-16 |
| A | WO 2019205013 A1 (SHENZHEN LAUNCH SOFTWARE CO., LTD.) 31 October 2019 (2019-10-31)<br>entire document | 1-16 |

Form PCT/ISA/210 (second sheet) (July 2022)

**INTERNATIONAL SEARCH REPORT**
Information on patent family members

International application No.

**PCT/CN2023/121399**

| Patent document cited in search report | | | Publication date (day/month/year) | Patent family member(s) | | | Publication date (day/month/year) |
|---|---|---|---|---|---|---|---|
| CN | 113352960 | A | 07 September 2021 | CN | 113352960 | B | 09 September 2022 |
| US | 2021107385 | A1 | 15 April 2021 | JP | 2021062755 | A | 22 April 2021 |
| | | | | CN | 112659995 | A | 16 April 2021 |
| CN | 113386638 | A | 14 September 2021 | None | | | |
| CN | 113581032 | A | 02 November 2021 | CN | 215971204 | U | 08 March 2022 |
| CN | 114932845 | A | 23 August 2022 | None | | | |
| CN | 106114316 | A | 16 November 2016 | None | | | |
| CN | 115092161 | A | 23 September 2022 | None | | | |
| CN | 110803080 | A | 18 February 2020 | CN | 110803080 | B | 26 February 2021 |
| CN | 113580867 | A | 02 November 2021 | None | | | |
| CN | 114043913 | A | 15 February 2022 | CN | 114043913 | B | 31 January 2023 |
| US | 2021197838 | A1 | 01 July 2021 | JP | 2021501718 | A | 21 January 2021 |
| | | | | JP | 7366015 | B2 | 20 October 2023 |
| | | | | EP | 3703981 | A1 | 09 September 2020 |
| | | | | WO | 2019086157 | A1 | 09 May 2019 |
| | | | | DE | 102017219585 | A1 | 09 May 2019 |
| WO | 2019205013 | A1 | 31 October 2019 | CN | 108770351 | A | 06 November 2018 |
| | | | | CN | 108770351 | B | 07 September 2021 |

Form PCT/ISA/210 (patent family annex) (July 2022)